# EUROPÄISCHE PATENTSCHRIFT

(11) **EP 2 446 181 B1**
(45) Veröffentlichungstag und Bekanntmachung des Hinweises auf die Patenterteilung: **20.03.2013**
(21) Anmeldenummer: 10723523.6
(22) Anmeldetag: 25.05.2010
(51) Int. Cl.: F16L 37/367

(54) **VORRICHTUNG ZUM VERBINDEN VON ZWEI LEITUNGSABSCHNITTEN, INSBESONDERE EINE MEHRFACHKUPPLUNG MIT EINEM INTEGRIERTEN ABSPERRVENTIL**
DEVICE FOR CONNECTING TWO LINE SECTIONS, IN PARTICULAR A MULTI-COUPLING HAVING AN INTEGRATED SHUT-OFF VALVE
DISPOSITIF DE CONNEXION DE DEUX SECTIONS CONDUCTRICES, EN PARTICULIER UN COUPLAGE MULTIPLE AVEC UNE VANNE D ARRÊT INTÉGRÉE

(30) Priorität: 23.06.2009 DE 102009030936
(43) Veröffentlichungstag der Anmeldung: 02.05.2012
(73) Patentinhaber: Eisele Pneumatics GmbH & Co. KG, 71332 Waiblingen (DE)
(72) Erfinder: WARNER, Holger, 71336 Waiblingen (DE)
(74) Vertreter: Crazzolara, Helmut
(86) Internationale Anmeldenummer: PCT/EP2010/003175
(87) Internationale Veröffentlichungsnummer: WO 2010/149256

(56) Entgegenhaltungen:
- US-A- 2 854 258
- US-A- 6 158 717
- US-A1- 2003 136 142
- US-B1- 6 341 803

## Beschreibung

Die Erfindung betrifft eine Vorrichtung zum Verbinden von zwei Leitungsabschnitten, insbesondere eine Mehrfachkupplung mit einem integrierten Absperrventil.

Derartige Vorrichtungen sind beispielsweise aus dem unter www.eiselepneumatics.de ersichtlichen Produktprogramm der Anmelderin, insbesondere betreffend Mehrmedien- und Mehrfachkupplungen, bekannt. Beim Zusammenstecken und/oder Auseinanderziehen von Kupplungsdose und Kupplungsstecker können hohe Kräfte erforderlich sein, die eine manuelle Betätigung erschweren. Dies gilt insbesondere dann, wenn die angeschlossenen Leitungsabschnitte unter Druck stehen, weil dann der Mediendruck beim Zusammenstecken der Betätigungsrichtung entgegenwirkt.

Aus der US 6,158,717 A und der US 2003/0136142 A1 sind Verbindungsvorrichtungen mit integrierten Ventilen bekannt.

Aus der US 6,341,803 B1 ist eine Verbindungsvorrichtung bekannt, mit der mehrere männliche und weibliche Kupplungselemente gleichzeitig verbindbar oder trennbar sind.

Aus der US 2,854,258 A ist eine Vorrichtung mit den Merkmalen des Oberbegriffs des Anspruchs 1 bekannt.

Der Erfindung liegt die Aufgabe zugrunde, eine gattungsgemäße Vorrichtung bereitzustellen, welche die Nachteile des Standes der Technik überwindet. Insbesondere soll die Vorrichtung beim Zusammenstecken und/oder beim Auseinanderziehen mit geringen Kräften betätigbar sein. In einer Ausführungsart soll bei kleiner Bauform eine hohe mechanische Stabilität und eine dauerhaft hohe Mediendichtheit bereitstellbar sein.

Das Problem ist durch die im Anspruch 1 bestimmte Vorrichtung gelöst. Besondere Ausführungsarten der Erfindung sind in den Unteransprüchen bestimmt.

In einer Ausführungsart ist die Aufgabe gelöst durch eine Vorrichtung zum Verbinden von zwei Leitungsabschnitten, wobei die Vorrichtung eine mit einem ersten Leitungsabschnitt verbindbare Kupplungsdose und einen mit einem zweiten Leitungsabschnitt verbindbaren und mit der Kupplungsdose zusammensteckbaren Kupplungsstecker aufweist, und wobei die Vorrichtung ein Dichtmittel aufweist, das im zusammengesteckten Zustand die Verbindung zwischen Kupplungsdose und Kupplungsstecker dichtet; das Dichtmittel ist an der Kupplungsdose angeordnet und im zusammengesteckten Zustand an einer Außenfläche des Kupplungssteckers in Anlage.

In einer Ausführungsart ist das Dichtmittel in Anlage an einer in Bezug auf die Steckrichtung radial außen liegenden zylindrischen Mantelfläche des Kupplungssteckers. Beim Zusammenstecken von Kupplungsdose und Kupplungsstecker gleitet das Dichtmittel entlang dieser zylindrischen Mantelfläche.

Durch die Anordnung des Dichtmittels an der Kupplungsdose ist es möglich, die geometrischen Abmessungen des Kupplungssteckers, insbesondere seine Erstreckung radial zur Steckrichtung, zu reduzieren, wodurch die Fläche, auf die der Mediendruck beim Zusammenstecken und/oder beim Auseinanderziehen wirkt, reduziert ist. Damit ist auch die dem Zusammenstecken der Vorrichtung aufgrund des unter Druck anstehenden Fluids entgegen gerichtete Kraft reduziert. Die für das Dichtmittel, beispielsweise ein O-Ring, erforderliche Baugröße in radialer Richtung kann durch die Kupplungsdose bereitgestellt werden, ohne dass sich dadurch die dem Zusammenstecken entgegenwirkende Druckkraft erhöht.

In einer Ausführungsart ist das Dichtmittel in eine in die Kupplungsdose eingebrachte Nut eingelegt. Dadurch ist es möglich, das Dichtmittel insbesondere in Steckrichtung vorgebbar zu positionieren.

In einer Ausführungsart weist die Nut in Steckrichtung eine Erstreckung auf, die größer ist als die Ausdehnung des Dichtmittels im unverformten Zustand. Dadurch ist das Dichtmittel in Steckrichtung mit einem vorgebbaren Spiel beweglich gelagert, wodurch die Betätigung der Vorrichtung beim Zusammenstecken weiter vereinfacht ist und/oder das Dichtmittel mechanisch weniger beansprucht ist.

In einer Ausführungsart ist das Dichtmittel an einem Buchsenelement der Kupplungsdose angeordnet. Das Buchsenelement ist mit einem Steckerelement des Kupplungssteckers zusammensteckbar, insbesondere ist das Steckerelement in das Buchsenelement einsteckbar. Das Buchsenelement kann mit einer Buchsenelementaufnahmeöffnung des Steckergrundkörpers zusammensteckbar sein. Der Steckergrundkörper kann mit dem Dosengrundkörper zusammensteckbar sein. Die Vorrichtung weist mindestens im teilweise zusammengesteckten Zustand radial in Bezug auf die Steckrichtung ein Spiel zwischen dem Kupplungsstecker und der Kupplungsdose auf, insbesondere zwischen dem Buchsenelement und dem Steckergrundkörper, durch das ein Be- und/oder Entlüftungskanal gebildet ist, über den beim Zusammenstecken und/oder Auseinanderziehen Fluid in den durch die einander zugewandten Enden von Kupplungsstecker und Kupplungsdose begrenzten Raum eintreten oder aus diesem entweichen kann. Dadurch ist die Vorrichtung beim Zusammenstecken und/oder Auseinanderziehen einfacher handhabbar

Das Dichtmittel ist in eine Nut im Buchsenelement eingesetzt. Die Tiefe der Nut ist kleiner als die Erstreckung des Dichtmittels in Radialrichtung, so dass das Dichtmittel in den Steckraum des Buchsenelements hineinragt, in den das Steckerelement des Kupplungssteckers einführbar ist.

In einer Ausführungsart ist das Dichtmittel im zusammengesteckten Zustand der Vorrichtung in Anlage an einem mindestens abschnittsweise hohlen Abschnitt des Steckerelements des Kupplungssteckers. Der hohle Abschnitt kann hohlzylindrisch sein, insbesondere hohlkreiszylindrisch oder hohlpolygonzylindrisch, kegelförmig, teilsphärisch oder anderweitig gekrümmt. Der Abschnitt des Steckerelements, an dem das Dichtmittel in Anlage ist, kann im Innern eine Führung für einen insbesondere in Steckrichtung beweglichen Ventilkörper bilden. Der Außendurchmesser des Steckerelements ist dabei angepasst an den Innendurchmesser des Buchsenelements der Kupplungsdose, insbesondere etwas kleiner als der Innendurchmesser des Buchsenelements. In einer Ausführungsart ist das Steckerelement in einen Steckergrundkörper des Kupplungssteckers eingesetzt und, dicht mit diesem verbunden, insbesondere in den Steckergrundkörper eingepresst.

In einer Ausführungsart ist das Buchsenelement mechanisch fest und dicht an einem Dosengrundkörper der Kupplungsdose festgelegt, insbesondere in einen Dosengrundkörper eingepresst.

In einer Ausführungsart ist die Wandstärke des hohlen Abschnitts des Steckerelements kleiner als die in Bezug auf die Steckrichtung radiale Ausdehnung des Dichtmittels. Die Wandstärke kann weniger als 80 %, insbesondere weniger als 60 % und vorzugsweise weniger als 40 % der radialen Ausdehnung des Dichtmittels betragen.

In einer Ausführungsart weist die Vorrichtung an der Kupplungsdose und/oder an dem Kupplungsstecker mindestens zwei Anschlusseinrichtungen für jeweils einen Leitungsabschnitt auf. Durch ein Zusammenstecken von Kupplungsdose und Kupplungsstecker sind alle angeschlossenen Leitungsabschnitte in vorgebbarer Weise miteinander verbindbar. In einer Ausführungsart ist jeweils ein an der Kupplungsdose angeschlossener Leitungsabschnitt mit jeweils einem an dem Kupplungsstecker angeschlossenen Leitungsabschnitt miteinander verbindbar. Dadurch lassen sich mit der erfindungsgemäßen Vorrichtung Mehrfachkupplungen realisieren, die trotz der hohen Anzahl der miteinander zu verbindenden Leitungsabschnitte und trotz der in den miteinander zu verbindenden Leitungsabschnitten gegebenenfalls anstehenden Mediendrücke mit vergleichsweise geringen Betätigungskräften zusammensteckbar sind.

In einer Ausführungsart weist die Kupplungsdose und/oder der Kupplungsstecker ein Ventil auf, mittels dem im nicht gesteckten Zustand der angeschlossene Leitungsabschnitt abgesperrt ist. Dadurch können Kupplungsdose und Kupplungsstecker getrennt werden, ohne dass das Fluid aus den angeschlossenen Leitungsabschnitten austritt. Es sind Ausführungsarten möglich mit einem Ventil nur an der Kupplungsdose, oder mit einem Ventil nur am Kupplungsstecker, oder mit einem Ventil sowohl an der Kupplungsdose als auch am Kupplungsstecker, oder auch ohne Ventil.

In einer Ausführungsart ist das Ventil durch das Zusammenstecken von Kupplungsdose und Kupplungsstecker betätigbar, insbesondere wird das Ventil beim Zusammenstecken von Kupplungsdose und Kupplungsstecker automatisch betätigt.

In einer Ausführungsart weist das Ventil einen Ventilkörper auf, der mittels eines Federelements in den geschlossenen Zustand des Ventils vorgespannt ist. Das Federelement ist in einem Bereich der Kupplungsdose und/oder des Kupplungssteckers angeordnet, der im geschlossenen Zustand des Ventils von der Umgebung abgeschlossen ist. Dadurch ist eine Beschädigung und/oder Verunreinigung des Federelements zuverlässig verhindert. Alternativ oder ergänzend kann das oder ein weiteres Federelement dem Ventilkörper in Richtung auf das offene Ende der Kupplungsdose und/oder des Kupplungssteckers hin vorgelagert angeordnet sein und sich beispielsweise an einer flanschartigen Verbreiterung des Ventilkörpers abstützen. Der Ventilkörper kann mindestens abschnittsweise hohlzylindrisch ausgebildet sein. Der Ventilkörper kann eine oder mehrere in Steckrichtung schräg oder quer verlaufende Bohrung aufweisen für einen Durchtritt des Fluids. Der Ventilkörper kann auch auf andere Weise ausgebildet sein, beispielsweise einen vorzugsweise in Steckrichtung verlaufenden Zentralabschnitt aufweisen, von dem radial strahlenförmig und in Umfangsrichtung um die Steckrichtung vorzugsweise gleichverteilt Abstandselemente abstehen, mittels denen eine Längsführung des Ventilkörpers, beispielsweise an einem Steckerelement, realisierbar ist.

In einer Ausführungsart ist das Federelement durch eine Spiralfeder gebildet. Die Spiralfeder kann enger werdende Windungen aufweisen, insbesondere in Richtung auf den Ventilkörper enger werdende Windungen. Das Federelement stützt sich mit einem Ende an dem Ventilkörper ab und mit dem anderen Ende beispielsweise an einem Steckergrundkörper. In einer Ausführungsart sind die Federelemente der Kupplungsdose und des Kupplungssteckers identisch, so dass hierfür Gleichteile verteilt werden können.

In einer Ausführungsart weist die Kupplungsdose ein erstes Ventil mit einem ersten Ventilkörper auf, der in einem Buchsenelement geführt und in Steckrichtung beweglich gelagert ist. Der erste Ventilkörper ist im geschlossenen Zustand des ersten Ventils in Steckrichtung von einem axialen Ende der Kupplungsdose zurückversetzt. Insbesondere kann der erste Ventilkörper gegenüber dem axialen Ende eines Dosengrundkörpers und/oder eines Buchsenelements der Kupplungsdose zurückversetzt sein. Dadurch ist eine Verunreinigung und/oder Beschädigung des ersten Ventilkörpers zuverlässig verhindert.

In einer Ausführungsart weist der Kupplungsstecker ein zweites Ventil mit einem zweiten Ventilkörper auf, der in einem Steckerelement geführt und in Steckrichtung beweglich gelagert ist. Der zweite Ventilkörper ist im geschlossenen Zustand des zweiten Ventils in Steckrichtung von einem axialen Ende des Kupplungssteckers zurückversetzt. Insbesondere kann der zweite Ventilkörper gegenüber einem Steckergrundkörper zurückversetzt sein. Dadurch ist eine Verunreinigung und/oder Beschädigung des zweiten Ventilkörpers zuverlässig verhindert.

In einer Ausführungsart weist die Kupplungsdose und/oder der Kupplungsstecker ein weiteres Dichtmittel für den anzuschließenden Leitungsabschnitt auf. Das weitere Dichtmittel kann baugleich sein mit dem an der Kupplungsdose angeordneten Dichtmittel für die dichte Verwendung zwischen Kupplungsdose und Kupplungsstecker. Dadurch können für die Dichtmittel Gleichteile eingesetzt werden, was insbesondere für aggressive Medien vorteilhaft ist, weil dort besonders hochwertige Dichtmittel eingesetzt werden müssen, deren Preis durch größere Stückzahlen reduziert werden kann.

Weitere Vorteile, Merkmale und Einzelheiten der Erfindung ergeben sich aus den Unteransprüchen sowie der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt einen Schnitt durch ein Ausführungsbeispiel einer erfindungsgemäßen Vorrichtung,
- Fig. 2: zeigt eine perspektivische Ansicht auf das dem Kupplungsstecker zugewandte Ende der Kupplungsdose, und
- Fig. 3: zeigt eine perspektivische Ansicht auf das der Kupplungsdose zugewandte Ende des Kupplungssteckers.

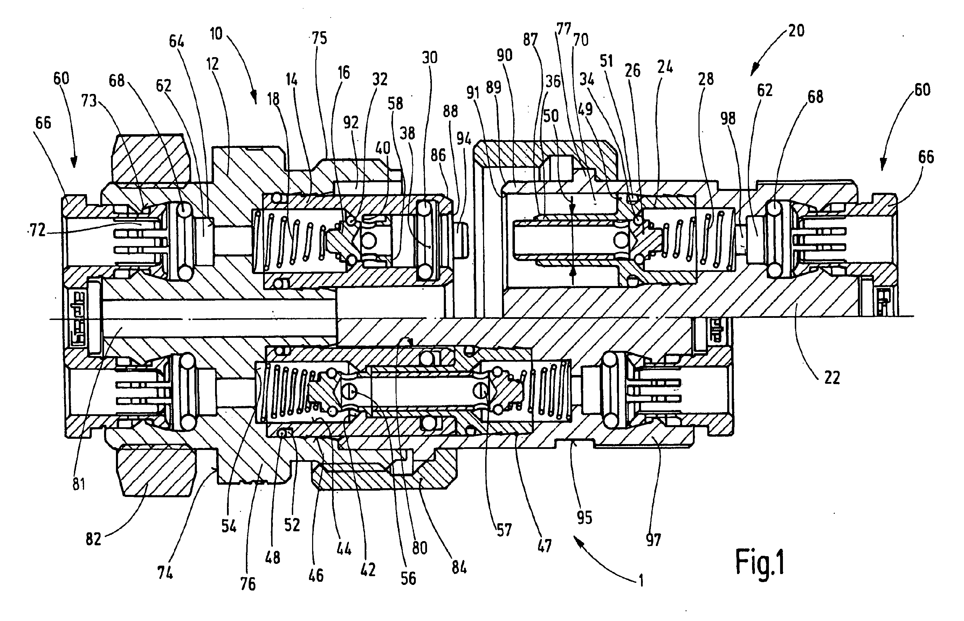

Die Fig. 1 zeigt einen Schnitt durch ein Ausführungsbeispiel einer erfindungsgemäßen Vorrichtung 1 zum Verbinden von zwei nicht dargestellten Leitungsabschnitten. Die Vorrichtung 1 weist eine mit einem ersten Leitungsabschnitt verbindbare Kupplungsdose 10 auf, die ihrerseits einen Dosengrundkörper 12 und ein darin angeordnetes Buchsenelement 14 aufweist, in dem ein mittels eines ersten Federelements 18 federkraftbelasteter erster Ventilkörper 16 angeordnet ist. Die Vorrichtung 1 weist außerdem einen Kupplungsstecker 20 auf, der seinerseits ein Steckergrundgehäuse 22 und ein darin angeordnetes Steckerelement 24 aufweist, in dem ein durch ein zweites Federelement 28 kraftbelasteter zweiter Ventilkörper 26 angeordnet ist.

In dem in der oberen Bildhälfte der Fig. 1 dargestellten noch nicht zusammengesteckten Zustand der Vorrichtung 1 ist der erste Ventilkörper 16 mittels eines in eine Ringnut in dem ersten Ventilkörper 16 eingelegte erste Ventildichtung 32 in Anlage an einem von dem Buchsenelement 14 ausgebildeten kegelförmigen Ventilsitz und verschließt dadurch den an der Kupplungsdose 10 anzuschließenden ersten Leitungsabschnitt. Der Ventilsitz kann auch nur abschnittsweise eine Kegelform aufweisen, und/oder mindestens abschnittsweise eine Kugelform aufweisen, und/oder mindestens abschnittsweise anderweitig gekrümmt sein, oder durch einen mindestens abschnittsweise ebenen, beispielsweise radial verlaufenden Absatz gebildet sein. In diesem Zustand ist der zweite Ventilkörper 26 mittels einer in eine Ringnut eingelegten zweiten Ventildichtung 34 in dichtender Anlage an einem von dem Steckerelement 24 ausgebildeten kegelförmigen Ventilsitz und sperrt damit den an den Kupplungsstecker 20 anschließbaren zweiten Leitungsabschnitt ab.

In dem in der unteren Bildhälfte der Fig. 1 dargestellten zusammengesteckten Zustand der Vorrichtung 1 ist der zweite Ventilkörper 26 in Anlage an dem ersten Ventilkörper 16 und sowohl der erste Ventilkörper 16 als auch der zweite Ventilkörper 26 sind entgegen der Kraft des ersten und zweiten Federelements 18, 28 jeweils von dem ihnen zugeordneten Ventilsitz abgehoben, so dass in dem in der unteren Bildhälfte dargestellten Zustand eine Verbindung zwischen den beiden Leitungsabschnitten hergestellt ist.

Die Vorrichtung 1 weist ein Dichtmittel 30 auf, das im zusammengesteckten Zustand die Verbindung zwischen Kupplungsdose 10 und Kupplungsstecker 20 nach außen dichtet. Das Dichtmittel 30 ist an der Kupplungsdose 10 angeordnet und im zusammengesteckten Zustand in Anlage an einer Außenfläche des Kupplungssteckers 20, im dargestellten Ausführungsbeispiel in Anlage an einer zylindrischen Mantelfläche des Steckerelements 24, insbesondere in Anlage an einem hohlen Steckerabschnitt 36, der im dargestellten Ausführungsbeispiel hohlkreiszylindrisch ist.

Das Buchsenelement 14 ist mindestens abschnittsweise ein im Wesentlichen rotationszylindrischer und insbesondere hohlzylindrischer Körper, der eine Steckaufnahme für das Steckerelement 24 bildet. An seinem dem Steckerelement 24 zugewandten Ende weist das Buchsenelement 14 eine im Wesentlichen zylindrische Öffnung auf, deren axiale Erstreckung in Steckrichtung größer ist als die Länge des Steckerabschnitts 36 des Steckerelements 24. Nahe einem dem Steckerelement 24 zugewandten axialen Ende ist auf der Innenseite eine ringförmige Nut 38 in das Buchsenelement 14 eingebracht, deren Tiefe in Radialrichtung geringer ist als die Schnurstärke der Dichtung 30 im unverformten Zustand. Dadurch steht das Dichtmittel 30 in die Steckaufnahme vor und kommt beim Zusammenstecken in zuverlässig dichtende Anlage an das Steckerelement 24. Die Erstreckung der Nut 38 in Steckrichtung ist größer als die Schnurstärke des Dichtmittels 30 im unverformten Zustand. Dadurch ist das Dichtmittel 30 in axialer Richtung in der Nut 38 bewegbar, so dass das Zusammenstecken erleichtert ist und/oder eine Beschädigung des Dichtmittels 30 in Folge der Verformung des Dichtmittels 30 beim Zusammenstecken und/oder im zusammengesteckten Zustand der Vorrichtung 1 verhindert ist.

Anschließend an den hohlzylindrischen Abschnitt für die Aufnahme des Steckerelements 24 weist das Buchsenelement 14 einen radial nach innen vorstehenden Absatz 40 auf, der einen Anschlag für den ersten Ventilkörper 16 im geöffneten Zustand des ersten Ventils der Kontaktdose 10 bilden kann. Anschließend an den Absatz 40 schließt sich in Richtung auf den ersten Leitungsabschnitt ein zylindrischer Abschnitt an, an den wiederum anschließend die Durchgangsöffnung des Buchsenelements 14 über eine Kegelfläche 42 in einen zylindrischen Abschnitt 44 übergeht, der eine größere lichte Weite aufweist als der zylindrische Abschnitt zur Aufnahme des Steckerelements 24. Im Bereich dieses zylindrischen Abschnitts 44 weist das Buchsenelement 14 auf seiner Außenseite vorzugsweise ringförmig verlaufende Klemmmittel 46 auf, mittels denen das Buchsenelement 14 in einer hohlzylindrischen Aufnahme im Dosengrundkörper 12 festlegbar ist, insbesondere mit dem Dosengrundkörper 12 verpressbar ist. Zur Erhöhung der Dichtheit ist ein Dichtelement 48 in eine im Bereich des zylindrischen Abschnitts 44 außenseitig eingebrachte Nut 52 eingelegt.

Im Bereich des hohlzylindrischen Abschnitts 44 ist außerdem das erste Federelement 18 angeordnet, das sich mit einem Ende an einem Absatz 54 des Dosengrundkörpers 12 abstützt und mit einem anderen Ende an einem von dem ersten Ventilkörper 16 ausgebildeten Absatz. Das erste Federelement 18 spannt den ersten Ventilkörper 16 derart vor, dass im nicht zusammengesteckten Zustand (obere Bildhälfte der Fig. 1) das erste Ventil der Kupplungsdose 10 geschlossen ist. Der erste Ventilkörper 16 tritt durch die im Ausführungsbeispiel durch den Absatz 40 gebildete Engstelle des Buchsenelements 14 mit einem hohlzylindrischen Abschnitt hindurch, der eine schräg und insbesondere quer zur Steckrichtung verlaufende Öffnung 56 für den Durchtritt des Fluids aufweist. Der erste Ventilkörper 16 weitet sich anschließend flanschartig.auf, wobei der Außendurchmesser der endseitigen flanschartigen Verbreiterung 58 derart an dem Innendurchmesser der das Steckerelement 54 aufnehmenden Öffnung angepasst ist, dass eine Führung der Längsbeweglichkeit des ersten Ventilkörpers 16 in dem Buchsenelement 14 gegeben ist.

An seinem dem Kupplungsstecker 20 gegenüberliegenden axialen Ende weist der Dosengrundkörper 12 eine Aufnahmebohrung 62 für den anzuschließenden ersten Leitungsabschnitt auf, der bis zu einem durch einen Absatz 64 gebildeten Anschlag einführbar ist und dabei in dichtende Anlage an ein Dichtmittel 68 bringbar ist. Die Anschlusseinrichtung 60 weist eine Spannzange 66 auf, deren Klemmzungen 72 durch ein Zusammenwirken mit einer Kegelfläche 73 bei einem Zug auf den ersten Leitungsabschnitt in klemmende Anlage an den ersten Leitungsabschnitt kommen und diesen an der Kupplungsdose 10 festlegen.

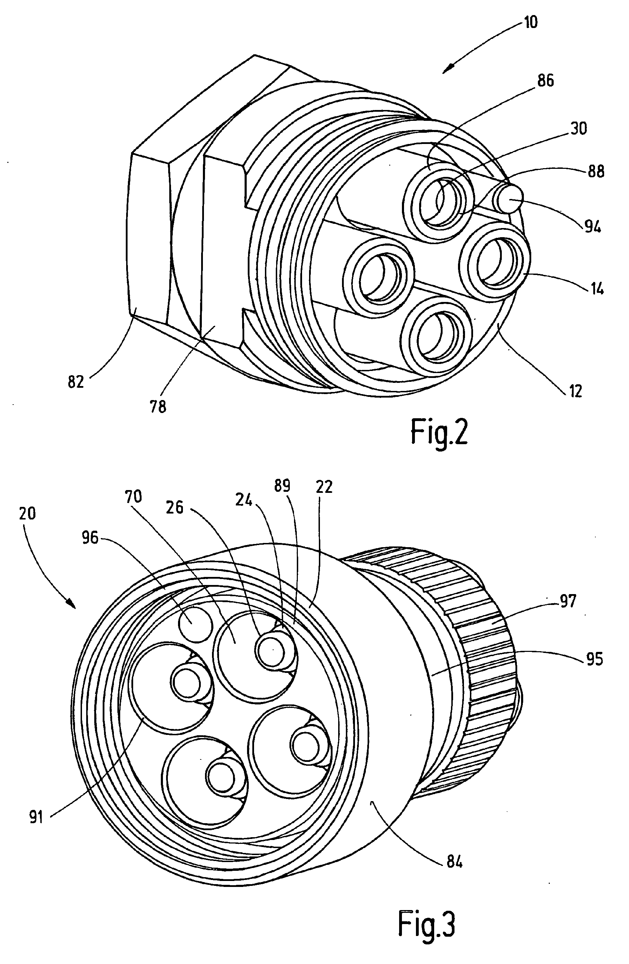

Radial außenseitig weist der Dosengrundkörper 12 ausgehend von seinem dem ersten Leitungsabschnitt zugewandten Ende zunächst einen im Wesentlichen zylindrischen Abschnitt mit einem Außengewinde auf, der über einen Absatz 74 in eine flanschartige Verbreiterung 76 übergeht, die eine Werkzeugangriffsfläche 78 (Fig. 2) aufweist. Auf das Außengewinde ist eine Kontermutter 82 aufschraubbar, mittels welcher der Dosengrundkörper 12 beispielsweise an einer Schottwand festlegbar ist.

An die Verbreiterung 76 schließt in Richtung auf den Kupplungsstecker 20 ein Abschnitt mit einem Außengewinde 75 an, auf das eine an dem Kupplungsstecker 20 angeordnete Überwurfmutter 84 aufschraubbar ist, mittels welcher der zusammengesteckte Zustand sicherbar ist.

An seinem dem Kupplungsstecker 20 zugewandten Ende weist das Buchsenelements 14 radial außen eine erste Einführschräge 86 für das Zusammenführen mit dem Steckergrundgehäuse 22 auf und/oder radial innenseitig eine zweite Einführschräge 88 für das Zusammenwirken mit dem Steckerelement 24.

An seinem dem Kupplungsstecker 20 zugewandten Ende bildet die Kupplungsdose 10 zwischen dem radial außen liegenden Dosengrundkörper 12 und dem radial innen liegenden Buchsenelement 14 einen vorzugsweise zylindrischen Aufnahmeraum 92 auf für die Aufnahme eines zylindrischen Endabschnitts des Steckergrundgehäuses 22. Im mindestens teilweise zusammengesteckten Zustand weist die Vorrichtung 1 radial in Bezug auf die Steckrichtung ein Spiel zwischen dem Buchsenelement 14 und dem Steckergrundkörper 22 auf, durch das ein Be- und/oder Entlüftungskanal 80 gebildet ist, über den beim Zusammenstecken und/oder Auseinanderziehen Fluid in den durch die einander zugewandten Enden von Kupplungsstecker 20 und Kupplungsdose 10 begrenzten Raum eintreten und/oder aus diesem entweichen kann. Der Be- und/oder Entlüftungskanal 80 steht dabei in Verbindung mit der Kanalöffnung 81, die im zusammengesteckten Zustand der Vorrichtung 1 von einer Stoßstelle zwischen Dosengrundkörper 12 und Steckergrundkörper 22 bis zu einem dem Kupplungsstecker 20 gegenüberliegenden Ende der Kupplungsdose 10 führt und im Ausführungsbeispiel als axiale Bohrung in den Dosengrundkörper 12 eingebracht ist.

Die Kupplungsdose 10 weist ein vorzugsweise zylindrisch geformtes Positionierelement 94 auf, das in eine Positionieraufnahme 96 (Fig. 3) in dem Kupplungsstecker 20 einführbar ist. Das Positionierelement 94 steht dabei axial vor, insbesondere über das Buchsenelement 14 vor.

An seinem der Kupplungsdose 10 zugewandten Ende weist der Steckergrundkörper 22 zunächst einen hohlzylindrischen Abschnitt 90 auf, in den das Steckerelement 24 eingesetzt ist. Zwischen dem Steckergrundkörper 22, insbesondere dem hohlzylindrischen Abschnitt 90, und dem Steckerelement 24 weist der Kupplungsstecker 20 eine Buchsenelementaufnahmeöffnung 70 auf, in welche das Buchsenelement 14 beim Zusammenstecken einsteckbar ist. Die lichte Weite der Buchsenelementaufnahmeöffnung 70 ist dabei größer als der Außendurchmesser des Buchsenelements 14, so dass zwischen dem Buchsenelement 14 und dem Steckergrundkörper 22 der Be- und/oder Entlüftungskanal 80 gebildet ist.

An seinem gegenüberliegenden axialen Ende weist der Steckergrundkörper 22 eine Öffnung für den Einsatz einer Anschlusseinrichtung 60 für den Anschluss des zweiten Leitungsabschnitts auf, wobei die Anschlusseinrichtung 60 des Kupplungssteckers 20 identisch aufgebaut ist wie die Anschlusseinrichtung 60 der Kupplungsdose 10. Die beiden hohlzylindrischen Abschnitte sind über eine Öffnung 98 für den Mediendurchtritt miteinander verbunden.

Das Steckerelement 24 weist an seinem der Kupplungsdose 10 zugewandten Ende den Steckerabschnitt 36 auf, in dem der zweite Ventilkörper 26 in Steckrichtung verschiebbar geführt ist. Die Wandstärke des Steckerabschnitts 36 ist dabei vergleichsweise gering, insbesondere geringer als die Schnurstärke des Dichtmittels 30, und kann beispielsweise zwischen 0,2 und 5 mm, insbesondere zwischen 0,5 und 2,5 mm und vorzugsweise zwischen 0,7 und 1,9 mm betragen. Der Durchmesser 50 des Steckerabschnitts 36 bestimmt dabei die aufgrund des Fluiddrucks dem Zusammenstecken entgegen wirkenden Kräfte. Mithin ist es besonders vorteilhaft, dass der Außendurchmesser 50 klein ist, weil dadurch die zum Zusammenstecken erforderlichen Betätigungskräfte und/oder die beim Auseinanderziehen auftretenden Kräfte reduziert sind.

Zwischen der Außenumfangsfläche des Steckerabschnitts 36 und dem hülsenförmigen Abschnitt des Steckergrundkörpers 22 bildet der Kupplungsstecker 20 einen ringförmigen Aufnahmeraum für den Eintritt des Buchsenelements 14. Hierzu weist der Steckerabschnitt 36 eine Einführschräge 87 auf. Auch der hohlzylindrische Abschnitt 90 des Steckergrundkörpers 22 weist an seinem der Kupplungsdose 10 zugewandten Ende eine äußere Einführschräge 89 und eine innere Einführschräge 91 auf.

Anschließend an den Steckerabschnitt 36 weist das Steckerelement 24 eine flanschartige Verbreiterung 49 auf, an die sich eine Nut zum Einlegen eines Dichtelements 51 anschließt. Daran schließt ein im Wesentlichen hohlzylindrischer Abschnitt mit Klemmmitteln 47 auf der Außenseite an zum Festlegen des Steckerelements 24 am Steckergrundkörper 22.

Das zweite Federelement 28 ist durch eine Spiralfeder gebildet, die mit einem Ende an dem Steckergrundkörper 22 anliegt und mit dem anderen Ende an dem zweiten Ventilkörper 26. Der zweite Ventilkörper 26 weist einen hohlzylindrischen Abschnitt auf zum Eintauchen in die Kupplungsdose 10 beim Zusammenstecken. Der hohlzylindrische Abschnitt weist mindestens eine, vorzugsweise vier schräg und insbesondere quer zur Steckrichtung verlaufenden Öffnungen 57 auf für den Durchtritt des Fluids im zusammengesteckten Zustand.

Im nicht zusammengesteckten Zustand ragt der zweite Ventilkörper 26 axial über das Ende des Steckerelements 24 hinaus, ist aber gegenüber dem Ende des Steckergrundkörpers 22 zurückversetzt, so dass eine Beschädigung oder Verunreinigung des zweiten Ventilkörpers 26 zuverlässig verhindert ist. Beim Zusammenstecken von Kupplungsdose 10 und Kupplungsstecker 20 kommt das axiale Ende des zweiten Ventilkörpers 26 in Anlage an den ersten Ventilkörper 16, insbesondere in Anlage an die flanschartige Verbreiterung 58. Beim vollständigen Zusammenstecken werden der erste und zweite Ventilkörper 16, 26 gegen die Wirkung des ersten und zweiten Federelements 18, 28 derart verschoben, dass die erste und zweite Ventildichtung 32, 34 von ihrem jeweils zugeordneten Ventilsitz abhebt und dadurch das erste Ventil der Kupplungsdose 10 und das zweite Ventil der Kupplungsdose 20 öffnet. Daraufhin tritt das Fluid der beiden Leitungsabschnitte in den von dem Buchsenelement 14 und dem Steckerelement 24 begrenzten Raum ein und wirkt einem weiteren Zusammenstecken entgegen. Der Druck wirkt dabei auf eine Fläche, die maßgeblich durch den Durchmesser 50 bestimmt ist. Je kleiner dieser Durchmesser 50 ist, desto geringer ist die dem Zusammenstecken entgegenwirkende Kraft. Durch die Anordnung des Dichtmittels 30 an der Kupplungsdose 10, d. h. durch die Verwendung eines innen dichtenden Dichtmittels 30, kann diese Kraft gering gehalten werden.

Radial außenseitig weist der Steckergrundkörper 22 anschließend an den hülsenförmigen Abschnitt 90 eine flanschartige Verbreiterung 77 auf, die eine Angriffsfläche für die Überwurfmutter 84 bildet. Daran schließt sich ein weiterer im Wesentlichen zylindrischer Abschnitt an, in dessen Bereich das Steckerelement 24 mit dem Steckergrundkörper 22 verpresst ist. Daran schließt sich eine ringförmige Einschnürung 95 an, die endseitig in einen im Wesentlichen zylindrischen Endabschnitt 97 übergeht. Die Einschnürung 95 und/oder der Endabschnitt 97 können eine Werkzeugangriffsfläche aufweisen. Der Endabschnitt 97 kann auch eine Rändelung oder dergleichen aufweisen.

Die Fig. 2 zeigt eine perspektivische Ansicht auf das dem Kupplungsstecker 20 zugewandte Ende der Kupplungsdose 10. In dem dargestellten Ausführungsbeispiel weist die Kupplungsdose 10 insgesamt vier Buchsenelemente 14 auf, die in Umfangsrichtung um jeweils 90° versetzt auf einer Kreislinie angeordnet sind.

Die Fig. 3 zeigt eine perspektivische Ansicht auf das der Kupplungsdose 10 zugewandte Ende des Kupplungssteckers 20. Der Kupplungsstecker 20 weist insgesamt vier in Umfangsrichtung um jeweils 90° zueinander versetzt auf einer Kreislinie angeordnete Steckerelemente 24 auf. Jedes Steckerelement 24 ist in einer vorzugsweise hohlzylindrischen Aufnahmeöffnung für den Eintritt des Buchsenelements 14 angeordnet, wobei jede Aufnahmeöffnung eine Einführschräge 91 für das erleichterte Einführen und Selbstzentrieren des Buchsenelements 14 aufweist. Das Positionierelement 94 der Kupplungsdose 10 (Fig. 2) tritt beim Zusammenstecken in die Positionierungsaufnahme 96 im Steckergrundkörper 22 ein.

## Patentansprüche

1. Vorrichtung (1) zum Verbinden von zwei Leitungsabschnitten, wobei die Vorrichtung (1) eine mit einem ersten Leitungsabschnitt verbindbare Kupplungsdose (10) und einen mit einem zweiten Leitungsabschnitt verbindbaren und mit der Kupplungsdose (10) zusammensteckbaren Kupplungsstecker (20) aufweist, und wobei die Vorrichtung ein Dichtmittel (30) aufweist, das im zusammengesteckten Zustand die Verbindung zwischen Kupplungsdose (10) und Kupplungsstecker (20) dichtet, wobei das Dichtmittel (30) an der Kupplungsdose (10) angeordnet ist und im zusammengesteckten Zustand von Kupplungsdose (10) und Kupplungsstecker (20) in Anlage an einer Außenfläche des Kupplungssteckers (20) ist, **dadurch gekennzeichnet, dass** die Kupplungsdose (10) an ihrem dem Kupplungsstecker (20) zugewandten Ende zwischen einem radial außen liegenden Dosengrundkörper (12) und einem radial innen liegenden Buchsenelement (14) einen Aufnahmeraum (92) für die Aufnahme eines zylindrischen Endabschnitts eines Steckergrundkörpers (22) des Kupplungssteckers (20) aufweist, dass im mindestens teilweise zusammengesteckten Zustand die Vorrichtung (1) radial in Bezug auf die Steckrichtung ein Spiel zwischen dem Buchsenelement (14) und dem Steckergrundkörper (22) aufweist, durch das ein Be- und/oder Entlüftungskanal (80) gebildet ist, über den beim Zusammenstecken und/oder Auseinanderziehen Fluid in den durch die einander zugewandten Enden von Kupplungsstecker (20) und Kupplungsdose (10) begrenzten Raum eintreten und/oder aus diesem entweichen kann.

2. Vorrichtung (1) nach Anspruch 1, **dadurch gekennzeichnet, dass** das Dichtmittel (30) in eine in die Kupplungsdose (10) eingebrachte Nut (38) eingelegt ist.

3. Vorrichtung (1) nach Anspruch 2, **dadurch gekennzeichnet, dass** die Nut (38) in Steckrichtung eine Erstreckung aufweist, die größer ist als die Ausdehnung des Dichtmittels (30) im unverformten Zustand.

4. Vorrichtung (1) nach Anspruch 1 oder einem der vorgenannten Ansprüche, **dadurch gekennzeichnet, dass** das Dichtmittel (30) an einem Buchsenelement (14) der Kupplungsdose (10) angeordnet ist.

5. Vorrichtung (1) nach Anspruch 1 oder einem der vorgenannten Ansprüche, **dadurch gekennzeichnet, dass** das Dichtmittel (30) im zusammengesteckten Zustand in Anlage an einem hohlen Abschnitt (36) eines Steckerelements (24) des Kupplungssteckers (10) ist.

6. Vorrichtung (1) nach Anspruch 5, **dadurch gekennzeichnet, dass** eine Wandstärke des hohlen Abschnitts (36) des Steckerelements (24) kleiner ist als die in Bezug auf die Steckrichtung radiale Ausdehnung des Dichtmittels (30).

7. Vorrichtung (1) nach Anspruch 1 oder einem der vorgenannten Ansprüche, **dadurch gekennzeichnet, dass** die Vorrichtung (1) an der Kupplungsdose (10) und/oder an dem Kupplungsstecker (20) mindestens zwei Anschlusseinrichtungen (60) für einen Leitungsabschnitt aufweist, und dass beim Zusammenstecken von Kupplungsdose (10) und Kupplungsstecker (20) alle angeschlossenen Leitungsabschnitte in vorgegebener Weise miteinander verbindbar sind, insbesondere an der Kupplungsdose (10) und an dem Kupplungsstecker (20) angeschlossene Leitungsabschnitte jeweils paarweise miteinander verbindbar sind.

8. Vorrichtung (1) nach Anspruch 1 oder einem der vorgenannten Ansprüche, **dadurch gekennzeichnet, dass** die Kupplungsdose (10) und/oder der Kupplungsstecker (20) ein Ventil aufweisen, mittels dem im nicht gesteckten Zustand der angeschlossene Leitungsabschnitt abgesperrt ist.

9. Vorrichtung (1) nach Anspruch 8, **dadurch gekennzeichnet, dass** das Ventil durch das Zusammenstecken von Kupplungsdose (10) und Kupplungsstecker (20) betätigbar ist.

10. Vorrichtung (1) nach Anspruch 8 oder 9, **dadurch gekennzeichnet, dass** das Ventil einen Ventilkörper (16, 26) aufweist, der mittels eines Federelements (18, 28) in den geschlossenen Zustand des Ventils vorgespannt ist, und dass das Federelement (18, 28) in einem Bereich der Kupplungsdose (10) und/oder des Kupplungssteckers (20) angeordnet ist, der im geschlossenen Zustand des Ventils von der Umgebung abgeschlossenen ist.

11. Vorrichtung (1) nach Anspruch 1 oder einem der vorgenannten Ansprüche, **dadurch gekennzeichnet, dass** das Federelement (18, 28) durch eine Spiralfeder gebildet ist.

12. Vorrichtung (1) nach Anspruch 1 oder einem der vorgenannten Ansprüche, **dadurch gekennzeichnet, dass** die Kupplungsdose (10) ein erstes Ventil mit einem ersten Ventilkörper (16) aufweist, der in einem Buchsenelement (14) geführt und in Steckrichtung beweglich gelagert ist, und dass der erste Ventilkörper (16) im geschlossenen Zustand des ersten Ventils in Steckrichtung von einem axialen Ende der Kupplungsdose (10) zurückversetzt ist.

13. Vorrichtung (1) nach Anspruch 1 oder einem der vorgenannten Ansprüche, **dadurch gekennzeichnet, dass** der Kupplungsstecker (20) ein zweites Ventil mit einem zweiten Ventilkörper (26) aufweist, der in einem Steckerelement (24) geführt und in Steckrichtung beweglich gelagert ist, und dass der zweite Ventilkörper (26) im geschlossenen Zustand des zweiten Ventils in Steckrichtung von einem axialen Ende des Kupplungssteckers (20) zurückversetzt ist.

14. Vorrichtung (1) nach Anspruch 1 oder einem der vorgenannten Ansprüche, **dadurch gekennzeichnet, dass** die Kupplungsdose (10) und/oder der Kupplungsstecker (20) ein weiteres Dichtmittel (68) für den anzuschließenden Leitungsabschnitt aufweist, und dass das weitere Dichtmittel (68) baugleich ist mit dem an der Kupplungsdose (10) angeordneten Dichtmittel (30) für die dichte Verbindung zwischen Kupplungsdose (10) und Kupplungsstecker (20).

## Claims

1. A device (1) for connecting two line sections, the device (1) comprising a coupling socket (10) that can be connected to a first line section and a coupling plug (20) that can be connected to a second line section and can be plugged into the coupling socket (10), and the device comprising a sealing means (30) which seals the connection between the coupling socket (10) and the coupling plug (20) in the plugged-in state, the sealing means (30) being disposed on the coupling socket (10) and lying against an outer surface of the coupling plug (20) in the plugged-in state of the coupling socket (10) and the coupling plug (20), **characterised in that** the coupling socket (10) has on its end facing towards the coupling plug (20) between a socket base body (12) lying on the outside radially and a bushing element (14) lying on the inside radially a receiving space (92) for receiving a cylindrical end section of a plug base body (22) of the coupling plug (20), that in the at least partially plugged-in state the device (1) has play radially in relation to the direction of plugging between the bushing element (14) and the plug base body (22) by means of which an aeration and/or deaeration channel (80) is formed via which fluid can pass into the space delimited by the ends of the coupling plug (20) and the coupling socket(10) facing one another and/or can escape from the latter when plugged together and/or pulled apart.

2. The device (1) according to Claim 1, **characterised in that** the sealing means (30) is placed in a groove (38) made in the coupling socket (10).

3. The device (1) according to Claim 2, **characterised in that** the groove (38) has in the direction of plugging an extension which is greater than the extension of the sealing means (30) in the non-deformed state.

4. The device (1) according to Claim 1 or any of the aforementioned claims, **characterised in that** the sealing means (30) is disposed on a bushing element (14) of the coupling socket (10).

5. The device (1) according to Claim 1 or any of the aforementioned claims, **characterised in that** in the plugged-in state the sealing means (30) is lying against a hollow section (36) of a plug element (24) of the coupling plug (10).

6. The device (1) according to Claim 5, **characterised in that** a wall thickness of the hollow section (36) of the plug element (24) is less than the radial extension of the sealing means (30) in relation to the direction of plugging.

7. The device (1) according to Claim 1 or any of the aforementioned claims, **characterised in that** the device (1) has on the coupling socket (10) and/or on the coupling plug (20) at least two connection devices (60) for a line section, and that when the coupling socket (10) and the coupling plug (20) are plugged together all of the connected line sections can be connected to one another in a pre-specified manner, in particular line sections connected to the coupling socket (10) and to the coupling plug (20) can respectively be connected to one another in pairs.

8. The device (1) according to Claim 1 or any of the aforementioned claims, **characterised in that** the coupling socket (10) and/or the coupling plug (20) comprise a valve by means of which in the non-plugged-in state the connected line section is blocked off.

9. The device (1) according to Claim 8, **characterised in that** the valve can be actuated by plugging together the coupling socket (10) and the coupling plug (20).

10. The device (1) according to Claim 8 or 9, **characterised in that** the valve comprises a valve body (16, 26) which is pre-tensioned by means of a spring element (18, 28) into the closed state of the valve, and that the spring element (18, 28) is located in a region of the coupling socket (10) and/or the coupling plug (20) which in the closed state of the valve is sealed off from the surroundings.

11. The device (1) according to Claim 1 or any of the aforementioned claims, **characterised in that** the spring element (18, 28) is formed by a coil spring.

12. The device (1) according to Claim 1 or any of the aforementioned claims, **characterised in that** the coupling socket (10) comprises a first valve with a first valve body (16) that is guided within a bushing element (14) and is mounted moveably in the direction of plugging, and that in the closed state of the first valve in the direction of plugging the first valve body (16) is displaced backwards by an axial end of the coupling socket (10).

13. The device (1) according to Claim 1 or any of the aforementioned claims, **characterised in that** the coupling plug (20) comprises a second valve with a second valve body (26) that is guided within a plug element (24) and is moveably mounted in the direction of plugging, and that in the closed state of the second valve the second valve body (26) is displaced backwards in the direction of plugging by an axial end of the coupling plug (20).

14. The device (1) according to Claim 1 or any of the aforementioned claims, **characterised in that** the coupling socket (10) and/or the coupling plug (20) comprises a further sealing means (68) for the line section to be connected, and that the further sealing means (68) is structurally identical to the sealing means (30) located on the coupling socket (10) for tight connection between the coupling socket (10) and the coupling plug (20).

## Revendications

1. Dispositif (1) de connexion de deux tronçons de conduit, le dispositif (1) ayant une boîte (10) d'accouplement pouvant être reliée à un premier tronçon de conduit et un connecteur (20) d'accouplement pouvant être relié au deuxième tronçon de conduit et pouvant être connecté à la boîte (10) d'accouplement, et dans lequel le dispositif a un moyen (30) d'étanchéité, qui, dans l'état connecté, rend étanche la liaison entre la boîte (10) d'accouplement et le connecteur (20) d'accouplement, le moyen (30) d'étanchéité étant disposé sur la boîte (10) d'accouplement et étant, à l'état connecté de la boîte (10) d'accouplement et du connecteur (20) d'accouplement, en application sur une surface extérieure du connecteur (20) d'accouplement, **caractérisé en ce que** la boîte (10) d'accouplement a, à son extrémité tournée vers le connecteur (20) d'accouplement, entre un corps (12) de base de la boîte se trouvant à l'extérieur radialement et un élément (14) de douille se trouvant à l'intérieur radialement, un espace (92) de réception d'un tronçon d'extrémité cylindrique d'un corps (22) de base du connecteur (20) d'accouplement, **en ce que**, dans l'état, au moins en partie, connecté, le dispositif (1) a, radialement par rapport à la direction de connexion, un jeu entre l'élément (14) de douille et le corps (22) de base du connecteur, par lequel il est formé un canal (80) d'alimentation en air et/ou d'évacuation de l'air, par lequel, lors de la connexion et/ou de la déconnexion, du fluide peut entrer dans l'espace délimité par les extrémités tournées l'une vers l'autre du connecteur (20) d'accouplement et de la boîte (10) d'accouplement et/ou s'en échapper.

2. Dispositif (1) suivant la revendication 1, **caractérisé en ce que** le moyen (30) d'étanchéité est mis dans une rainure (38) ménagée dans la boîte (10) d'accouplement.

3. Dispositif (1) suivant la revendication 2, **caractérisé en ce que** la rainure (38) a, dans la direction de connexion, une étendue qui est plus grande que l'étendue du moyen (30) d'étanchéité à l'état non déformé.

4. Dispositif (1) suivant la révendication 1 ou l'une des revendications précédentes, **caractérisé en ce que** le moyen (30) d'étanchéité est disposé sur un élément (14) de douille de la boîte (10) d'accouplement.

5. Dispositif (1) suivant la revendication 1 ou l'une des revendications précédentes, **caractérisé en ce que** le moyen (30) d'étanchéité est, à l'état connecté, en application sur un tronçon (36) creux d'un élément (24) du connecteur (10) d'accouplement.

6. Dispositif suivant la revendication 5, **caractérisé en ce qu'**une épaisseur de paroi du tronçon (36) creux de l'élément (24) d'accouplement est plus petite que l'étendue radiale, rapportée à la direction de connexion, du moyen (30) d'étanchéité.

7. Dispositif (1) suivant la revendication 1 ou l'une des revendications précédentes, **caractérisé en ce que** le dispositif (1) a, sur la boîte (10) d'accouplement et/ou sur le connecteur (20) d'accouplement, au moins deux dispositifs (60) de connexion pour un tronçon de conduit et **en ce que**, lors de la connexion de la boîte (10) d'accouplement et du connecteur (20) d'accouplement, tous les tronçons de conduit raccordés peuvent être reliés entre eux d'une façon prescrite, notamment des tronçons de conduit raccordés à la boîte (10) d'accouplement et au connecteur (20) d'accouplement peuvent être reliés entre eux respectivement par paire.

8. Dispositif (1) suivant la revendication 1 ou l'une des revendications précédentes, **caractérisé en ce que** la boîte (10) d'accouplement et/ou le connecteur (20) d'accouplement ont une vanne, au moyen de laquelle, à l'état non connecté, le tronçon de conduit raccordé est fermé.

9. Dispositif (1) suivant la revendication 8, **caractérisé en ce que** la vanne peut être actionnée par la connexion de la boîte (10) d'accouplement et du connecteur (20) d'accouplement.

10. Dispositif (1) suivant la revendication 8 ou 9, **caractérisé en ce que** la vanne a un obturateur (16, 26), qui est mis, à l'état fermé de la vanne, sous contrainte préalable au moyen d'un élément (18, 28) à ressort et **en ce que** l'élément (18, 28) à ressort est monté dans une région de la boîte (10) d'accouplement et/ou du connecteur (20) d'accouplement, qui, à l'état fermé de la vanne, est séparée de l'atmosphère ambiante.

11. Dispositif (1) suivant la revendication 1 ou l'une des revendications précédentes, **caractérisé en ce que** l'élément (18, 28) à ressort est formé par un ressort spirale.

12. Dispositif (1) suivant la revendication 1 ou l'une des revendications précédentes, **caractérisé en ce que** la boîte (10) d'accouplement a une première vanne ayant un premier obturateur (16), qui est guidé dans un élément (14) de douille et est monté mobile, dans la direction de connexion, et **en ce que** le premier obturateur (16) est, dans l'état fermé de la première vanne, décalé vers l'arrière, dans la direction de connexion, d'une extrémité axiale de la boîte (10) d'accouplement.

13. Dispositif (1) suivant la revendication 1 ou l'une des revendications précédentes, **caractérisé en ce que** le connecteur (20) d'accouplement a une deuxième vanne ayant un deuxième obturateur (26), qui est guidé dans un élément (24) du connecteur et qui est monté mobile, dans la direction de connexion, et **en ce que** le deuxième obturateur (26) est, dans l'état fermé de la deuxième vanne, décalé vers l'arrière, dans la direction de connexion, d'une extrémité axiale du connecteur (20) d'accouplement.

14. Dispositif (1) suivant la revendication 1 ou l'une des revendications précédentes, **caractérisé en ce que** la boîte (10) d'accouplement et/ou le connecteur (20) d'accouplement a un autre moyen (68) d'étanchéité, pour le tronçon de conduit s'y raccordant, et **en ce que** l'autre moyen (68) d'étanchéité est de même construction que le moyen (30) d'étanchéité disposé sur la boîte (10) d'accouplement, pour la connexion étanche entre la boîte (10) d'accouplement et le connecteur (20) d'accouplement.
